**Europäisches Patentamt**

**European Patent Office**

**Office européen des brevets**

(11) Veröffentlichungsnummer: **0 233 501 B1**

(19)

(12) **EUROPÄISCHE PATENTSCHRIFT**

(45) Veröffentlichungstag der Patentschrift: **10.04.91**

(51) Int. Cl.⁵: **B64C 11/00**

(21) Anmeldenummer: **87100841.3**

(22) Anmeldetag: **22.01.87**

(54) **Ausbildung von im Zustrom zu Luftschrauben, Mantelschrauben und/oder Fans liegenden Bauteilen zur Verringerung des von ihnen verursachten Zusatzlärms sowie zur Verringerung der Wechselbelastung der Propellerblätter.**

(30) Priorität: **18.02.86 DE 3605086**

(43) Veröffentlichungstag der Anmeldung:
**26.08.87 Patentblatt 87/35**

(45) Bekanntmachung des Hinweises auf die
Patenterteilung:
**10.04.91 Patentblatt 91/15**

(84) Benannte Vertragsstaaten:
**AT BE CH ES FR GB GR IT LI LU NL SE**

(56) Entgegenhaltungen:
**BE-A- 354 975**
**DE-A- 2 636 056**
**DE-C- 489 796**
**FR-A- 503 210**

(73) Patentinhaber: **Rhein-Flugzeugbau GmbH**
**Flugplatz an der Niersbrücke**
**W-4050 Mönchengladbach(DE)**

(72) Erfinder: **Fischer, Hans-Otto**
**Kickenstrasse 44a**
**W-4156 Willich 4(DE)**
Erfinder: **Hosemann, Siegfried**
**Am Nibelungenbad 35**
**W-4232 Xanten-Wardt(DE)**

(74) Vertreter: **Schramm, Ewald Werner Josef**
**Messerschmitt-Bölkow-Blohm GmbH Patent-**
**abteilung TM 43 HB Hünefeldstrasse 1-5**
**Postfach 10 78 45**
**W-2800 Bremen 1(DE)**

**Beschreibung**

Die Erfindung bezieht sich auf die besondere Ausbildung von Bauteilen, die im Zustrom zu Luft-, Mantelschrauben oder Fans liegen.

Die Vorteile bei der Zuordnung von Vortriebserzeugern, wie Luftschrauben, Mantelschrauben und/oder Fans hinter Rümpfen und Tragflächen anstatt vor diesen Bauteilen, entstehen durch einen gewissen Absaugeffekt, der die Strömung begradigt und eine längere laminare Grenzschicht ermöglicht. Hinzu kommt, daß sich diese Bauteile nicht im Bereich der höheren Strahlgeschwindigkeit und einer turbulenten, drallbehafteten Strömung der Antriebseinheit befinden, was den besseren Wirkungsgrad von Druckluftschrauben gegenüber einer Zuganordnung erklärt.

Aus statischen Gründen sind diese Bauteile jedoch nicht freigestaltbar und erzeugen, je nach Form und Dimension, eine sogenannte Nachlaufdelle, die mit wachsender Geschwindigkeit zunimmt und stromab in die Luftschraube abschwimmt. Dieser örtlich begrenzte Bereich weist in der umgebenden freien Anströmung eine geringere Geschwindigkeit auf, die einen Anstellwinkelsprung an den Luftschraubenblättern beim Durchdringen der Luftschraubenkreisfläche hervorruft, und damit den als Drehklang bekannten Zusatzlärm erzeugt. Durch den Anstellwinkelsprung wird zudem der Auftrieb und der Widerstand schlagartig erhöht, was ein Luftschraubenflattern anregen kann sowie die Dauerfestigkeit der Propellerblätter, ihre Einspannung und ggf. auch die Elemente der Blattverstellung negativ beeinflußt.

Bei Flugzeugen mit hohen Fluggeschwindigkeiten und den dabei notwendigen hohen Blattanstellwinkeln kann im Bereich der Nachlaufdelle ein Abreißen der Strömung auftreten, was zu besonders hohen Blattbelastungen führt. Eine weitere Folge hoher Fluggeschwindigkeiten ist eine deutliche Zunahme des Drehwiderstandes der Luftschraube, da je Luftschraubenumdrehung eine Abbremsung proportional zum Produkt aus Blattzahl und Anzahl der Störkörper entsteht, die einer Verschlechterung des Vortriebswirkungsgrades gleichkommt.

Bisher entwickelte Gegenmaßnahmen für die genannten Nachteile bestanden in der Vergrößerung des Abstandes zwischen der Bauteilhinterkante und der Luftschraubenkreisfläche, sowie der Ausbildung der Luftschraubenblätter und, soweit wie möglich, der im Zustrom liegenden Bauteile in Sichel- oder Pfeilform. Dadurch soll erreicht werden, daß die Nachlaufdellen nicht mehr auf der gesamten Länge gleichzeitig durchschlagen, sondern jeweils stückweise und damit zeitlich nacheinander durchdrungen werden (DE-C- 25 40 733, DE-C- 26 36 056). Der Ausbildung der Luftschrauben und besonders der Mantelschrauben in der dort beschriebenen Art sind jedoch statische Grenzen gesetzt, besonders wenn es sich um hochbelastete, verstellbare Luftschrauben handelt. Zudem können nur dann im Zustrom liegende Bauteile geringer Tiefe sichel- oder pfeilförmig ausgebildet werden, wenn ihr eigendlicher Verwendungszweck nicht gestört wird (zum Beispiel Tragflächen).

Der Erfindung liegt daher die Aufgabe zugrunde, die im Zustrom von Luftschrauben, Mantelschrauben und/oder Fans liegenden Bauteile mit in Strömungsrichtung großer Bautiefe so auszubilden, daß damit ein leiserer und die Luftschrauben oder Fanblätter weniger belastender Lauf ermöglicht wird.

Die erfinderische Lösung dieser Aufgabe ergibt sich aus den Merkmalen des Hauptanspruches. Vorteilhafte Ausgestaltungen und Weiterbildungen sind den Unteransprüchen zu entnehmen.

Die Zeichnung erläutert ein Ausführungsbeispiel der Erfindung. Es zeigen:

Fig. 1    einen Luftschraubenblattabschnitt mit dem Anstellwinkel der sich aus der Umfangsgeschwindigkeit U und der ungestörten Anströmgeschwindigkeit V ∞ ergibt,

Fig. 2    einen Luftschraubenabschnitt desssen Anströmung von einem im Zustrom liegenden Bauteil gestört wird,

Fig. 3    einen Luftschraubenabschnitt und ein im Zustrom zur Luftschraube liegendes aerodynamisch geformtes Bauteil, das aufgrund seiner Anstellung zum ungestörten Zustrom einen Vordrall für die Luftschraube erzeugt,

Fig. 4    einen Luftschraubenabschnitt und einen im Zustrom zur Luftschraube liegendes aerodynamisch geformtes Bauteil, das aufgrund seiner Vorwölbung an der Hinterkante einen Vordrall für die Luftschraube erzeugt,

Fig. 5    eine Mantelschraube, der ein Rumpf und eine Tragfläche als Störkörper vorgelagert sind, wobei die Tragfläche einen Naca-Einlaß aufweißt,

Fig. 6    einen Querschnitt durch das Tragflächensegment A-A mit Naca-Einlaß und

Fig.7    eine Darstellung wie Fig. 6, jedoch mit zusätzlicher Profilvorwölbung zur Vordrallerzeugung.

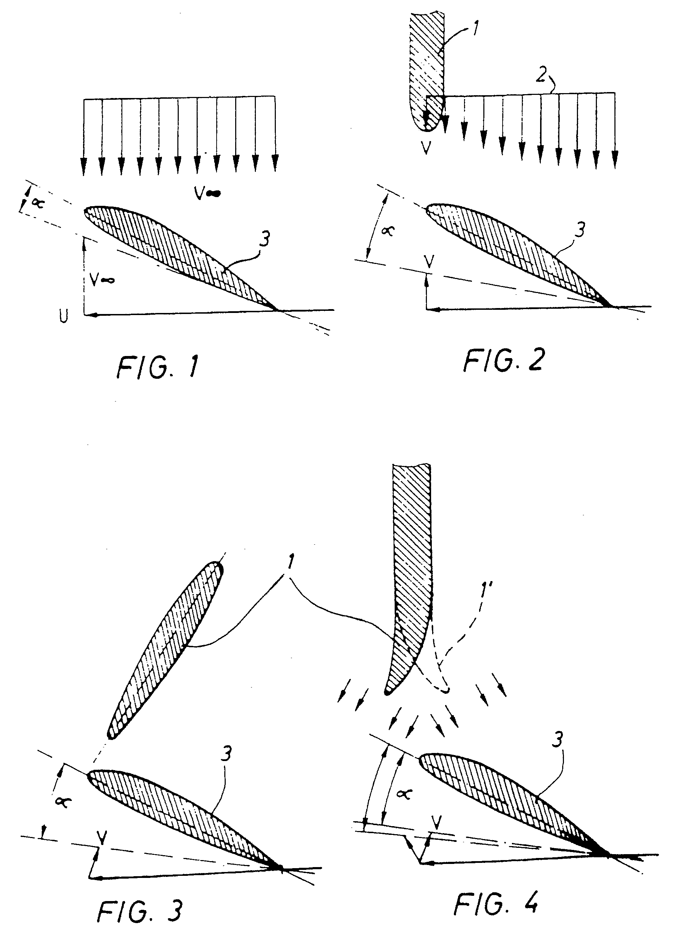

In den Darstellungen nach Fig. 1 und 2 ist gezeigt, wie sich die sogenannte Nachlaufdelle auf den Anstellwinkel $\alpha$ eines Luftschraubenabschnittes 3 auswirkt. Der ungestörte Zustrom V ∞ erzeugt in Verbindung mit der Umfangsgeschwindigkeit U einen kleineren Anstellwinkel $\alpha$ , als wenn ein im Zustrom liegendes Bauteil 1 die Zu stromgeschwindigkeit durch die am Bauteil 1 entstehende Strömungsgrenzschicht auf V verringert.

Für die Zusatzlärm- und -kräfteerzeugung ist der oben beschriebene Anstellwinkelsprung verantwortlich, der sich aus der Differenz der Anströmgeschwindigkeit V ∞ im freien, ungestörten Zustrom und dem Zustrom V im Nachlaufbereich des vorgelagerten Bauteils 1 bei konstanter Umfangsgeschwindigkeit U der Luftschraube 4 ergibt. Die Größe der Nachlaufdelle 2 ist ein Maß des aerodynamischen Widerstandes, die ohne Zusatzaufwand (z.B. Ausblasung oder Absaugung) nur wenig beeinflußbar ist. Zudem erfordern solche Maßnahmen auch Regeleinrichtungen, da Ausblas- bzw. Absaugvolumen und -geschwindigkeit der jeweiligen Fluggeschwindigkeit angepaßt werden müssen.

Eine Beeinflussung der beschriebenen Anstellwinkeldifferenz, und damit des Drucksprunges, ist jedoch durch eine Änderung der Anströmrichtung im gestörten Bereich möglich. Dies wird durch eine besondere Ausbildung des hinteren Teils des Bauteils 1 als Vordrallerzeuger erzielt (siehe Fig. 3,4). Zur Erzielung einer möglichst unveränderten Druckverteilung während eines Blattumlaufes sollen die Hinterkanten in ihrem Vordrallwinkel der Steigungsverteilung des Luftschraubenblattes angepaßt werden. Diese Vordrallung ist auch dann anwendbar, wenn Triebwerksabgase durch die Propellerkreisfläche 7 geleitet werden, um den Zusatzlärm zu vermindern. Die Erzeugung des Vordralls mit Hilfe von Klappen, Gittern und/oder Kaskaden ist möglich.

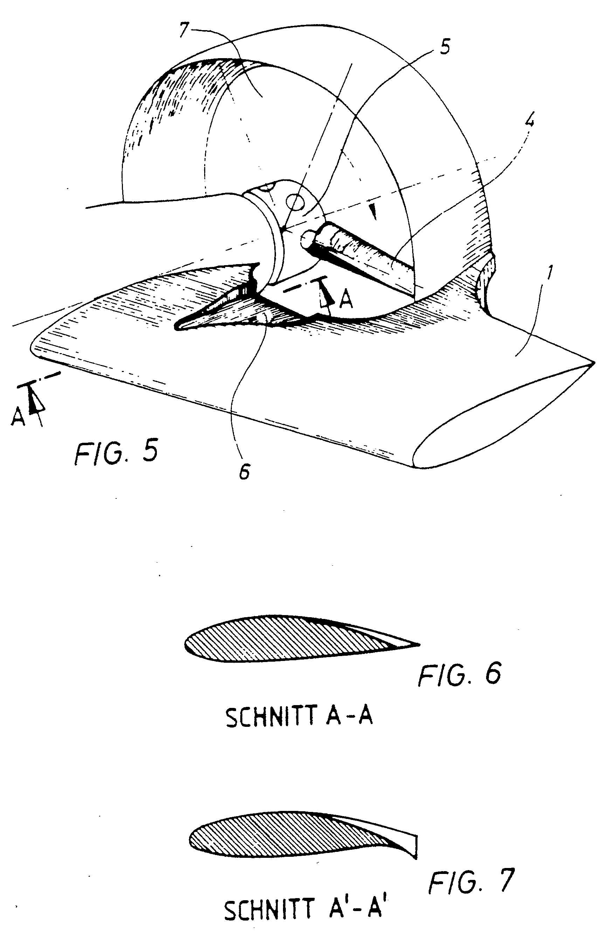

Durch die Anordnung eines sogenannten Naca-Einlasses 6 in der Oberfläche des im Zustrom liegenden Bauteils 1 im Bereich der Luftschraubenkreisfläche 7 läßt sich eine energiereiche Strömung durch Wirbelentstehung erzeugen, die in die Nachlaufdelle 2 des Bauteils 1 eingeleitet wird, und dadurch eine gewisse Glättung der Anströmung für die Luftschraube 4 bewirkt (Fig. 5, Fig. 6). Bei der Zuordnung des Naca-Einlasses 6 muß darauf geachtet werden, daß dieser jeweils in der entgegen den Drehsinn gerichteten Bauteilseite eingebaut wird. In Abhängigkeit von Luftschraubendurchmesser und Störkörperanzahl ist der Einsatz von mehreren Naca-Einlassen 6 möglich. Zudem stellt die Verbindung des Naca-Einlasses 6 mit der vordrallerzeugenden Gestaltung von Bauteil 1 gemäß Fig. 4 und Fig. 7 eine besonders vorteilhafte Ausgestaltung der Erfindung dar.

**durch gekennzeichnet**, daß die Bauteile (1) in ihrer Oberfläche mindestens einen sogenannten Naca-Einlaß (6) aufweisen, der an den Hinterkanten der Bauteile (1) im radial äußeren Bereich der Luftschraube oder des Fans (4) jeweils auf der gegen den Drehsinn gerichteten Bauteilseite eingebaut ist.

2. Ausbildung nach Anspruch 1, **dadurch gekennzeichnet**, daß zumindest der Auslauf eines im Zustrom liegenden und aerodynamisch geformten Bauteils (1) so verwölbt ist, daß ein Vordrall in Drehrichtung der Luftschraube oder des Fans (4) erzeugt wird.

3. Ausbildung nach Anspruch 1 , **dadurch gekennzeichnet**, daß der Vordrall des Zustroms in Richtung der Luftschraube oder des Fans (4) durch die Anordnung von Klappen, Gittern oder Kaskaden entsteht.

## Claims

1. Construction of components lying in the inflow to propellers, enclosed propellers and/or fans for the reduction of the supplementary noise caused thereby and for the reduction of the alternating loading of the propeller blades, characterised in that the components (1) have in their surface at least one socalled Naca-inlet (6), which is incorporated at the rear edges of the component (1) in the radially outer region of the propeller or the fan (4) and in each case at the side of the component facing against the direction of rotation.

2. Construction according to claim 1, characterised in that at least the trailing end of a component (1), lying in the inflow and of aerodynamic shape, is so curved that an initial whirl is produced in the direction of rotation of the propeller or the fan (4).

3. Construction according to claim 1, characterised in that the initial whirl of the inflow in the direction of the propeller or the fan (4) arises by virtue of an arrangement of flaps, grids or cascades.

## Ansprüche

1. Ausbildung von im Zustrom zu Luftschrauben, Mantelschrauben und/oder Fans liegenden Bauteilen zur Verringerung des von ihnen verursachten Zusatzlärms sowie zur Verringerung der Wechselbelastung der Propellerblätter, **da-**

## Revendications

1. Réalisation de composants situés dans le flux amont d'hélices, d'hélices en cage et/ou de soufflantes pour réduire le bruit additionnel ainsi occasionné ainsi que pour réduire les charges alternées exercées sur les pales des hélices, caractérisée en ce que les composants (1) présentent dans leur surface supérieure, au moins une entaille Naca (6) qui est prévue au niveau du bord de fuite des composants (1), dans la zone radialement à l'extérieur de l'hélice ou de la soufflante (4), chaque fois du côté du composant opposé au sens de rotation.

2. Réalisation selon la revendication 1, caractérisée en ce qu'au moins la sortie d'un composant placé dans le flux d'attaque et qui est formé de manière aérodynamique (1) est bombée pour créer une torsion préalable dans le sens de rotation de l'hélice ou de la soufflante (4).

3. Réalisation selon la revendication 1, caractérisée en ce que la torsion préalable du flux d'attaque dans la direction de l'hélice ou de la soufflante (4) s'obtient par la mise en place de volets, de grilles ou de cascades.

FIG. 1

FIG. 2

FIG. 3

FIG. 4

FIG. 5

FIG. 6

SCHNITT A-A

FIG. 7

SCHNITT A'-A'